(19) Europäisches Patentamt
European Patent Office
Office européen des brevets

(11) **EP 1 916 730 A1**

(12) **EUROPEAN PATENT APPLICATION**

(43) Date of publication:
**30.04.2008 Bulletin 2008/18**

(51) Int Cl.:
*H01M 8/02* (2006.01)     *H01M 8/04* (2006.01)
*H01M 8/10* (2006.01)

(21) Application number: **07251102.5**

(22) Date of filing: **15.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.09.2006 JP 2006254743**

(71) Applicant: **Kabushiki Kaisha Toshiba**
**Tokyo 105-8001 (JP)**

(72) Inventors:
• **Yagi, Ryosuke**
**Tokyo 105-8001 (JP)**

• **Sadamoto, Atsushi**
**Tokyo 105-8001 (JP)**
• **Tomimatsu, Norihiro**
**Tokyo 105-8001 (JP)**
• **Sato, Yuusuke**
**Tokyo 105-8001 (JP)**

(74) Representative: **Granleese, Rhian Jane**
**Marks & Clerk**
**90 Long Acre**
**London WC2E 9RA (GB)**

(54) **Fuel cell system**

(57) A fuel cell system includes a cell stack comprising a plurality of power generation cells, each including a first flow channel plate, a second flow channel plate, and a membrane electrode assembly; a first current collector configured to collect a current; a second current collector configured to collect a current; a third current collector configured to collect a current; a fourth current collector configured to collect a current from a downstream region in the second plate; and a controller.

**FIG. 2**

EP 1 916 730 A1

**Description**

CROSS REFERENCE TO RELATED APPLICATIONS AND INCORPORATION BY REFERENCE

This application is based upon and claims the benefit of priority from the prior Japanese Patent Application No. P2006-254743, filed on September 20, 2006; the entire contents of which are incorporated herein by reference.

BACKGROUND OF THE INVENTION

1. Field of the Invention

The present invention relates to a fuel cell system suitable for a direct fuel cell which generates electric power by directly supplying liquid fuel such as alcohol to a fuel cell.

2. Description of the Related Art

In a direct fuel cell that directly supplies liquid fuel such as alcohol to a power generation unit, a concentration of the fuel supplied to the power generation unit is controlled within a fixed range, thus making it possible to increase fuel utilization efficiency and power generation efficiency in the power generation unit. There has been known a method of sensing a concentration of the fuel supplied to an anode electrode of the power generation unit by using a fuel concentration sensor to control a fuel concentration. However, the method using the concentration sensor requires instruments such as a sensor cabinet and a control board, and accordingly, is not preferable in terms of realizing miniaturization and simplification of a fuel cell system. Moreover, when a characteristic change with time occurs in the power generation unit, in some cases, the optimum fuel concentration value for power generation goes out of an initial concentration value, resulting in that it is difficult to obtain sufficient performance at such a controlled concentration initially set by the concentration sensor.

As a method of sensing the fuel concentration without using the sensor, there have been known a method of sensing the fuel concentration based on a temperature of the power generation unit, a method of sensing the fuel concentration based on an output voltage of the entirety of the power generation unit, a method of sensing the fuel concentration from a difference between output densities of an upstream power generation cell and a downstream power generation cell in a plurality of stacked power generation cells (for example, refer to JPA (KOKAI)2004-327354), and the like.

However, in the method of sensing the fuel concentration based on the temperature of the power generation unit, when a volume of the power generation unit is small, the temperature of the power generation unit is prone to vary owing to an outside temperature and a loading current. Accordingly, it is difficult to sense the fuel concentration accurately. On the contrary, when the volume of the power generation unit is large, a heat capacity of the power generation unit also becomes large, and accordingly, a delay time of a temperature change with respect to a concentration change becomes extremely large.

In the method of sensing the fuel concentration based on the output voltage of the entirety of the power generation unit, when the output voltage is lower than a desired voltage, it is difficult to determine whether such a low voltage state is brought by a state of a low fuel concentration or by a state of a high fuel concentration. Moreover, the output voltage is sometimes affected by an environmental factor, local water clogging of the cell, variations of a flow distribution, and the like, sometimes resulting in that sufficient accuracy cannot be obtained.

In the method of sensing the fuel concentration from the difference between the output densities of the upstream power generation cell and the downstream power generation cell, it is necessary to feed the fuel supplied to the upstream power generation cells into the downstream power generation cells. Accordingly, a route of an anode passage is elongated, and a large pressure is required for a fuel pump in order to circulate the fuel. Moreover, even if the fuel concentration can be optimized in the entirety of the power generation unit, the fuel concentration cannot be controlled to the optimum value for each of the power generation cells. In particular, when the power generation unit of the direct fuel cell is thinned and areally enlarged, a large concentration gradient occurs between an inlet side and an outlet side even in one electrode surface, and an output density in the electrode surface becomes uneven.

SUMMARY OF THE INVENTION

An aspect of the present invention inheres in a fuel cell system encompassing a cell stack comprising a plurality of power generation cells stacked on each other, each including a first flow channel plate, a second flow channel plate, and a membrane electrode assembly interposed between the first and second flow channel plates, the first flow channel plate of most cathode side is assigned as a cathode side first plate and the second flow channel plate of most anode side is assigned as a anode side second plate; a first current collector configured to collect a current from an upstream region in one of the cathode side first plate or the anode side second plate; a second current collector spaced from the first current collector, configured to collect a current from a downstream region in one of the cathode side first plate or the anode side second plate; and a controller configured to control a supply amount of alcohol to the power generation cells, based on a difference between current densities of the first and second current collectors.

Another aspect of the present invention inheres in a fuel cell system encompassing a plurality of power generation cells, each includes: a first upstream flow channel plate: a second upstream flow channel plate opposing to the first upstream flow channel plate: a first downstream flow channel plate disposed on a downstream side of the first upstream flow channel plate, and insulated from the first upstream f low channel plate: a second downstream flow channel plate disposed on a downstream side of the second upstream flow channel plate, and insulated from the second downstream flow channel plate; and a membrane electrode assembly interposed between the first upstream and downstream flow channel plates and the second upstream and downstream flow channel plates; and a controller configured to control a supply amount of alcohol to the power generation cells, based on a difference between current densities of the first and first downstream plates.

Still another aspect of the present invention inheres in a fuel cell system encompassing a membrane electrode assembly; a plate opposed to the membrane electrode assembly, having a flow channel which flows alcohol; a first current collector having a plurality of holes, opposing to the plate through the membrane electrode assembly; a second current collector opposed to the first current collector, interposing the plate therebetween, and configured to collect a current from an upstream region of the plate; a third current collector spaced from the second current collector, and configured to collect a current from a downstream region of the plate; and a controller configured to control a supply amount of the alcohol to the plate based on a difference between current densities of the second and third current collectors.

BRIEF DESCRIPTION OF DRAWINGS

Fig. 1 is a block diagram illustrating a fuel cell system according to an embodiment of the present invention;
Fig. 2 is a cross-sectional view illustrating an example of a power generator (cell stack) according to the embodiment;
Fig. 3 is a perspective view illustrating the power generator according to the embodiment;
Fig. 4 is a flowchart illustrating a method for driving the fuel cell system according to the embodiment;
Fig. 5 is a flowchart illustrating a method of controlling a fuel concentration of the power generator according to the embodiment;
Fig. 6 is a schematic diagram illustrating a state where the electrons move in the power generator according to the embodiment;
Fig. 7 is a graph illustrating a relationship between current densities of an upstream region and a downstream region in the power generator (I1/It, I2/It) and alcohol concentration supplied to the power generator;
Fig. 8 is a graph illustrating a relationship between power generation efficiency of the power generator and the ratio ((I1-I2)/It) of the difference between the density I1 of the current flowing to the cathode first current collector and the density I2 of the current flowing to the cathode second current collector with respect to the average current density It;
Fig. 9 is a graph illustrating relationships between the alcohol (methanol) utilization efficiency and the average concentration of the alcohol when the supplied alcohol concentration is set at 1.5M.
Fig. 10 is a perspective view illustrating a fuel cell system according to a first modification;
Fig. 11 is a cross-sectional view illustrating a fuel cell system according to a second modification;
Fig. 12 is a cross-sectional view illustrating a fuel cell system according to the second modification;
Fig. 13 is a cross-sectional view illustrating a fuel cell system according to a third modification;
Fig. 14 is a cross-sectional view illustrating a fuel cell system according to a fourthmodification;
Fig. 15 is a cross-sectional view illustrating a fuel cell system according to a fifth modification; and
Fig. 16 is a cross-sectional view illustrating a fuel cell system according to other embodiments of the present invention.

DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified. In the following descriptions, numerous details are set forth such as specific signal values, etc. to provide a thorough understanding of the present invention. However, it will be obvious to those skilled in the art that the present invention may be practiced without such specific details.

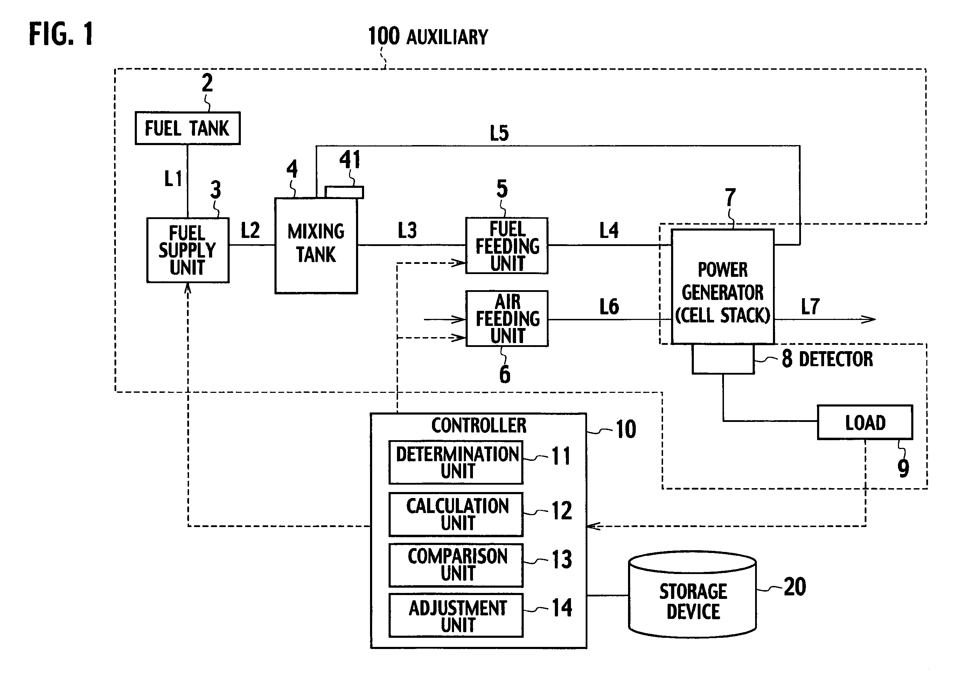

As shown in FIG. 1, a fuel cell system according to an embodiment of the present invention includes a power generator (cell stack) 7, an auxiliary 100 necessary to make the power generator 7 generate electricity, a controller 10 which controls the auxiliary 100, and a storage device 20 connected to the controller 10.

The auxiliary 100 includes a fuel tank 2, a fuel supply unit 3, a mixing tank 4, a fuel feeding unit 5, an air feeding unit 6, a load 9, and a detector 8. In the fuel tank 2, fuel such as alcohol or a high-concentration alcohol solution containing the alcohol and a small amount of water may be stored. As the alcohol, for example, methanol may be suitable . The fuel supply unit 3 supplies the alcohol or the high-concentration alcohol solution, which is fed from the fuel tank 2, to the mixing tank 4.

The mixing tank 4 mixes the alcohol or the high-concentration alcohol solution with a fluid (fluid containing an alcohol solution) exhausted from the power generator 7, and stores an alcohol solution having optimum concentration for the power generation. The fuel feeding unit 5 feeds the alcohol solution, which is fed from the mixing tank 4, to an anode electrode of the power generator 7. The air feeding unit 6 feeds the air to a cathode electrode of the power generator 7. The load 9 takes electric energy out of the power generator 7. The detector 8 detects the electric energy taken out by the load 9.

The fuel tank 2 and the fuel supply unit 3 are connected to each other by a line L1. The fuel supply unit 3 and the mixing tank 4 are connected to each other by a line L2. The mixing tank 4 and the fuel feeding unit 5 are connected to each other by a line L3. The fuel feeding unit 5 and the power generator 7 are connected to each other by a line L4. The power generator 7 and the mixing tank 4 are connected to each other by a line L5, and the fluid exhausted from the anode electrode of the power generator 7 is circulated to the mixing tank 4. The line L5 runs through a gas, such as carbon dioxide, generated in the power generator 7. Accordingly, a gas-liquid separator 41 for separating a gas and a liquid is provided on the way of the line L5 or with the mixing tank 4.

The air feeding unit 6 and the power generator 7 are connected to each other by a line L6. The fluid exhausted from the power generator 7 is released into the atmosphere through a line L7. Note that the line L7 may be connected to the mixing tank 4, and the fluid generated in the cathode electrode of the power generator 7 may be supplied to the mixing tank 4.

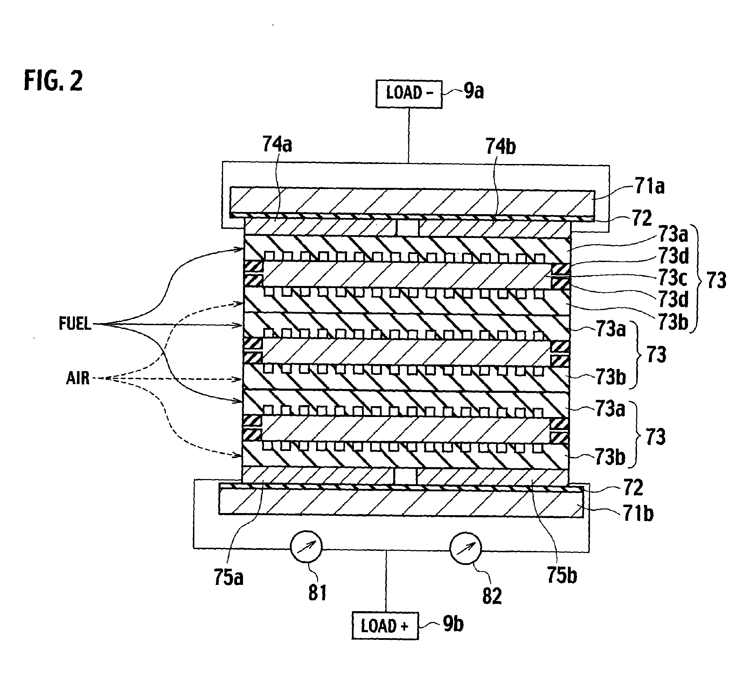

FIG. 2 shows an example of the power generator 7. The power generator 7 includes a plurality of power generation cells 73 each having substantially the same structures and serially stacked on one another. First and second clamping plates 71a and 71b sandwich and fix the power generation cells 73. Each of the power generation cells 73 include a membrane electrode assembly (MEA) 73c, an anode flow channel plate 73a and a cathode flow channel plate 73b which are opposed to each other while interposing the MEA 73c therebetween, and gaskets 73d which insulate the anode flow channel plate 73a and the cathode flow channel plate 73b from each other.

Each of the MEAs 73c includes an electrolyte membrane formed of a proton-conductive solid-state polymer film, electrodes (anode and cathode) formed by coating catalysts on both surfaces of the electrolyte membrane, and gas diffusion layers formed on outsides of the electrodes, which are for supplying the fuel and the air to the MEA 73c, exhausting a reaction product of the fuel and the air therefrom, and smoothly collecting electrons obtained by a reaction of the fuel and the air. For example, each of the MEAs 73c shown in FIG. 2 may use a Nafion film (registered trademark) as the electrolyte membrane, platinum/ruthenium as the catalyst of the anode electrode, and platinum as the catalyst of the cathode electrode. Commercially available carbon paper may be used as the gas diffusion layer on the anode electrode side, and commercially available carbon cloth canbe used as the gas diffusion layer on the cathode electrode side.

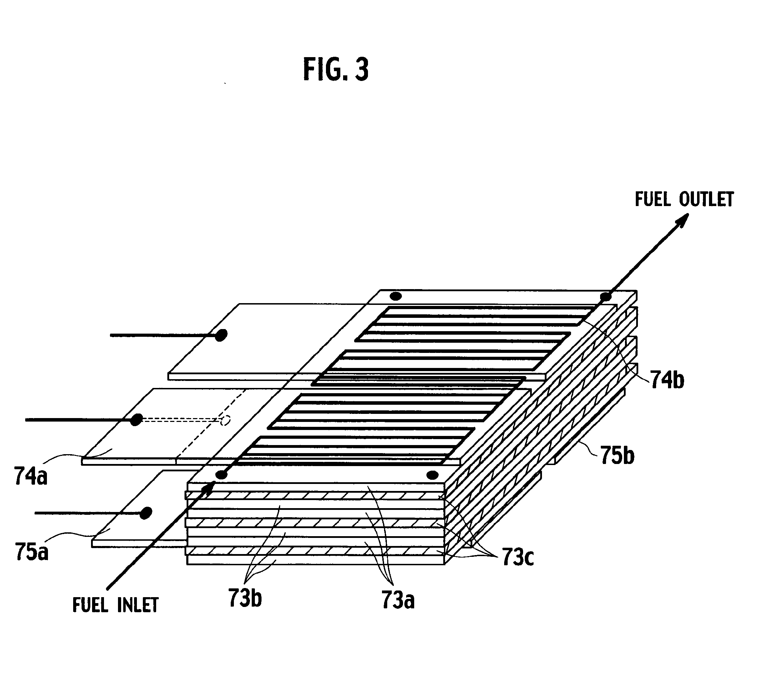

Conductive carbon is usable as a material of the anode flow channel plates 73a and the cathode flow channel plates 73b. As shown in FIG. 3, each of the anode flow channel plates 73a includes, on a surface thereof on a contact side with the MEA 73c, a meandering channel called a "serpentine flow channel" that is one or a plurality of flow channels through which the fuel flows from an inlet of the fuel to an outlet of the fuel in a meandering manner. The alcohol solution is fed from the fuel feeding unit 5 of FIG. 1 parallelly to the respective fuel inlets of the serpentine flow channels of the anode flow channel plates 73a. Each of the cathode flow channel plates 73b includes, on a surface thereof on a contact side with the MEA 73c, a similar serpentine flow channel to that of each anode flow channel plate 73a, or a plurality of parallel flow channel without any meander, through which the air flows inparallel. The air is fed from the air feeding unit 6 of FIG. 1 parallelly to the respective passages of the cathode flow channel plates 73b. The fuel and the air may be fed to the anode flow channel plates 73a and the cathode flow channel plates 73b, respectively, by providing branch manifolds in the power generation cells 73, or by connecting manifolds to outsides thereof.

As shown in FIG. 2, an anode first current collector 74a is disposed on an upstream region in the anode flow channel plate 73a of the uppermost power generation cell 73 opposed to the first clamping plate 71a. An anode second current collector 74b is disposed on a downstream region in the anode flow channel plate 73a of the uppermost power generation cell 73 opposed to the first clamping plate 71a. In FIG. 2, the "upstream region" refers to a region on the left side of the page space, which is close to a side to which the fuel is fed, and the "downstream region" refers to a region on the right side of the page space, which is close to a side from which the fuel is exhausted. In FIG. 3, the "upstream region" refers to a region on a side close to the "fuel inlet" of FIG. 3, and the "downstream region" refers to a region on a side close to the "fuel outlet" of FIG. 3. Moreover, in the present embodiment, the "uppermost" of the uppermost power generation cell 73 refers to the upper side of the page space. The "lowermost" to be described later refers to the lower side of the page space. In FIGs. 2 and 3, the anode flow channel plate 73a of the uppermost power generation cell 73 is assigned on an end of an anode electrode side (most anode side) of the power generation cells 73. The cathode flow channel plate 73b of the lowermost power generation cell 73 is assigned on an end of a cathode electrode side (most cathode side) of the power generation cells 73. These terms "uppermost" and "lowermost" have no relationship with a gravity direction of the fuel cell system.

The anode first current collector 74a collects the electric energy out of the upstream region in the anode flow channel plates 73a. The anode second current collector 74b collects the electric energy out of the downstream region in the anode flow channel plates 73a. Note that, as shown in FIG. 3, the anode first current collector 74a and the anode second current collector 74b are spaced from each other at a fixed distance between the upstream region and the downstream region, and are thereby insulated from each other.

Meanwhile, as shown in FIG. 2, a cathode first current collector 75a opposed to the anode first current collector 74a is disposed under an upstream region in the cathode flow channel plate 73b of the lowermost power generation cell 73 opposed to the second clamping plate 71b. A cathode second current collector 75b opposed to the anode second current collector 74b is disposed under a downstream region in the cathode flow channel plate 73b opposed to the second clamping plate 71b.

The cathode first current collector 75a collects the electric energy out of the upstream region in the cathode flow channel plate 73b. The cathode second current collector 75b collects the electric energy out of the downstream region in the cathode flow channel plate 73b. The cathode first current collector 75a and the cathode second current collector 75b are spaced from each other at a fixed distance between the upstream region and the downstream region, and are thereby insulated from each other.

The anode first current collector 74a, the anode second current collector 74b, the cathode first current collector 75a, and the cathode second current collector 75b are formed by implementing a gold plating treatment for surfaces of copper plates in order to increase conductivity thereof. An insulating sheet 72 is disposed between the first clamping plate 71a and a pair of the anode first current collector 74a and the anode second current collector 74b. An insulating sheet 72 is disposed between the second clamping plate 71b and a pair of the cathode first current collector 75a and the cathode second current collector 75b.

The anode first current collector 74a and the anode second current collector 74b are parallelly connected to a load 9a. The cathode first current collector 75a and the cathode second current collector 75b are parallelly connected to a load 9b. In FIG. 2, areas of the anode first current collector 74a, the anode second current collector 74b, the cathode first current collector 75a, and the cathode second current collector 75b are the same; however, the areas may be different from one another.

An ammeter 81 for measuring a value of a current collected by the cathode first current collector 75a is disposed on a lead wire that connects the cathode first current collector 75a and the load 9b to each other. An ammeter 82 for measuring a value of a current collected by the cathode second current collector 75b is disposed on a lead wire that connects the cathode second current collector 75b and the load 9b. Each of the ammeters 81 and 82 may be directly inserted between the two strips of the divided lead wire, or alternatively, measuring instruments that measure electromagnetic force from the lead wire in a non-contact state without being directly inserted thereinto may be used. Moreover, the ammeters 81 and 82 may be disposed on lead wires that connect the anode first current collector 74a and the load 9a to each other and connect the anode second current collector 74b and the load 9a to each other. When a current value (load current value) of the load 9a is known, either the ammeter 81 or the ammeter 82 just needs to be disposed.

The controller 10 of FIG. 1 includes a determination unit 11, a calculation unit 12, a comparison unit 13, and an adjustment unit 14. The determination unit 11 determines whether or not the auxiliary 100 necessary to drive the power generator 7 operates normally. The calculation unit 12 calculates current densities of the cathode first current collector 75a and the cathode second current collector 75b, for example, based on the current values measured by the ammeter 81 and the ammeter 82 in FIG. 2.

For example, the comparison unit 13 reads out a setting range of a ratio of a current density difference, which is stored in the storage device 20 in advance, and compares, with the setting range, such a current density difference between the cathode first current collector 75a and the cathode second current collector 75b, which is calculated by the calculation unit 12. Based on a result of the comparison, the adjustment unit 14 controls the fuel supply unit 3 or the fuel feeding unit 5, and adjusts a supply amount of the alcohol supplied to the power generator 7. The storage device 20 stores the setting range for controlling the alcohol concentration of the power generator 7 within the predetermined range, various setting conditions necessary to control the auxiliary 100 by the controller 10, and the like.

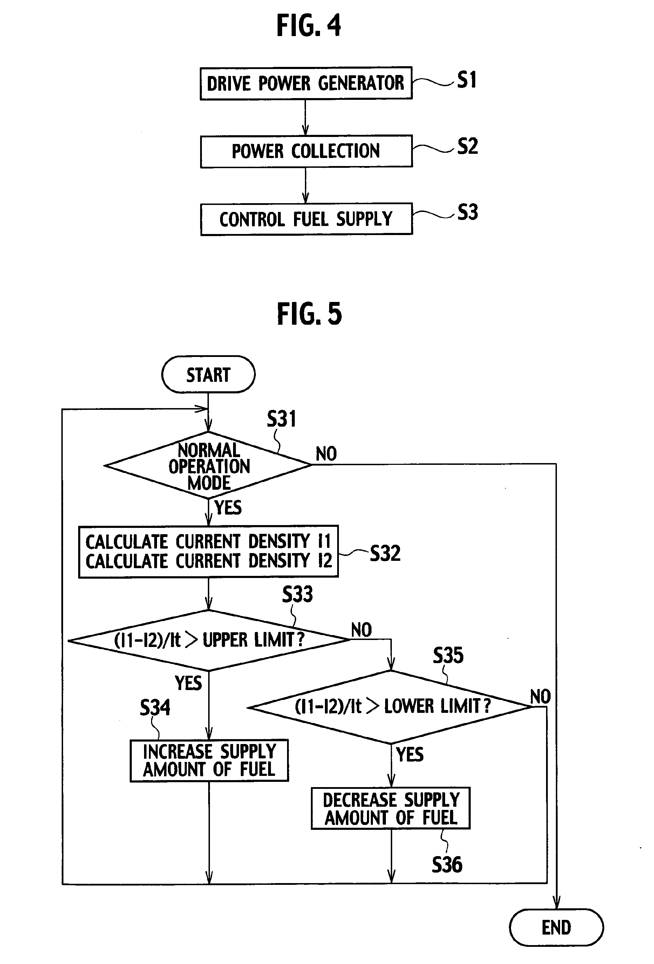

Next, a description will be made of a flow of operations of the fuel cell system according to the present embodiment by using a flowchart of FIG. 4. First, in Step S1 of FIG. 4, the adjustment unit 14 of FIG. 1 adjusts the fuel feeding unit 5, parallelly feeds the alcohol solution fed from the mixing tank 4 of FIG. 1 to the respective anode flow channel plates 73a of the power generator 7, which are shown in FIG. 2, and drives the power generator 7. Moreover, the adjustment unit 14 of FIG. 1 adjusts the air feeding unit 6, parallelly feeds the air to the respective cathode flow channel plates 73b of the power generator 7 shown in FIG. 2, and drives the power generator 7.

Specifically, for example, the adjustment unit 14 of FIG. 1 adjusts the fuel feeding unit 5 so that alcohol utilization efficiency can be about 25% in terms of a supply amount of the alcohol to the anode flow channel plates 73a of FIG. 2, and adjusts the air feeding unit 6 so that oxygen utilization efficiency can be about 30% in terms of a supply amount of the air to the cathode flow channel plates 73b. The "alcohol utilization efficiency" refers to a ratio of an amount (mol/s) of the alcohol for use in the reaction in the power generator 7 with respect to an amount (mol/s) of the alcohol fed to the entirety of the power generator 7. The alcohol utilization efficiency is represented by an inverse number of a theoretical air-fuel ratio (stoichiometric value) .

By the drive of the power generator 7, an unreacted alcohol solution and the product such as the carbon dioxide generated in the anode flow channel plates 73a of the power generator 7 are fed to the mixing tank 4 through the line L5 shown in FIG. 1. Then, from the fed product and the unreacted alcohol solution, the gas such as the carbon dioxide is removed in the gas-liquid separator 41, and then the unreacted alcohol solution is housed in the mixing tank 4. Meanwhile, the moisture generated in the cathode flow channel plates 73b of the power generator 7 and the remaining air are exhausted to the outside through the line L7.

In Step S2 of FIG. 4, the load 9 takes the electric energy (current) out of the power generator 7. At this time, the value of the current of the load 9, which is taken out of the power generator 7, and the current values collected by the cathode first current collector 75a and the cathode second current collector 75b, which are detected by the ammeters 81 and 82 of FIG. 2, are recorded in the storage device 20 through the controller 10.

Next, in Step S3, the controller 10 of FIG. 1 reads out the current values stored in the storage device 20, and controls the auxiliary 100 so that the concentration of the alcohol solution as the fuel fed to the power generator 7 can be optimum. A description will be made of details of a method of the control by using a flowchart of FIG. 5.

In Step S31 of FIG. 5, the determination unit 11 of FIG. 1 determines whether or not the power generator 7 is in a normal operation mode. The "normal operation mode" indicates that the system is not in such a transient state as starting and ending, and that the auxiliary 100 including the fuel supply unit 3, the fuel feeding unit 5, and the air feeding unit 6 operates normally. When the system is determined not to be in the normal operation mode, a load current cannot be extracted normally, and accordingly, the control is discontinued and ended. Meanwhile, when the system is determined to be in the normal operation mode, the control proceeds to Step S32.

In Step S32 , the calculation unit 12 of FIG. 1 calculates the current density I1 ($A/cm^2$) of the cathode first current collector 75a of FIG. 2 and the current density I2 ($A/cm^2$) of the cathode second current collector 75b of FIG. 2. The current density I1 can be calculated by dividing the current value of the cathode first current collector 75a, which is detected by the ammeter 81, by an area of a portion where the cathode first current collector 75a, the anode first current collector 74a, and the MEAs 73c overlap one another. The current density I2 can be calculated by dividing the value of the current collected by the cathode second current collector 75b by an area of a portion where the cathode second current collector 75b, the anode second current collector 74b, and the MEAs 73c overlap one another.

Note that, when the value of the load current taken out by the load units 9a and 9b is known, the current density I2 may be calculated by dividing, by the area where the cathode second current collector 75b, the anode second current collector 74b, and the MEAs 73c overlap one another, a value obtained by subtracting the current value of the cathode first current collector 75a from the load current value. The values of the current densities I1 and I2 are stored in the storage device 20 of FIG. 1.

In Step S33 of FIG. 5, the comparison unit 13 of FIG. 1 reads out the values of the current densities I1 and I2 from the storage device 20, and compares a ratio ((11-12)/It) of a difference between the current densities of the cathode first current collector 75a and the cathode second current collector 75b with respect to an average current density It of the MEAs 73c with an upper limit value of the difference stored in the storage device 20. Here, the "average current density It" refers to a current density to be averagely taken out of the entire surfaces of the MEAs 73c of FIG. 2, and is calculated by dividing the load current value of the load 9 by an area of the MEAs 73c. When the ratio exceeds the upper limit value, the control proceeds to Step S34, where the adjustment unit 14 of FIG. 1 adjusts the fuel supply unit 3 to increase the supply amount of the alcohol to be supplied to the power generator 7. When the ratio does not exceed the upper limit value, the control proceeds to Step S35.

In Step S35, the comparison unit 13 reads out the values of the current densities I1 and I2 from the storage device 20, and compares the ratio ((I1-I2)/It) of the difference between the current densities of the cathode first current collector 75a and the cathode second current collector 75b with respect to the average current density It of the MEAs 73c with a lower limit value of the ratio stored in the storage device 20. When the ratio falls down below the lower limit value, the control proceeds to Step S36, where the adjustment unit 14 of FIG. 1 adjusts the fuel supply unit 3 to reduce the supply amount of the alcohol to be supplied to the power generator 7. When the ratio exceeds the lower limit value, the control returns to Step S31, from which the control is continued.

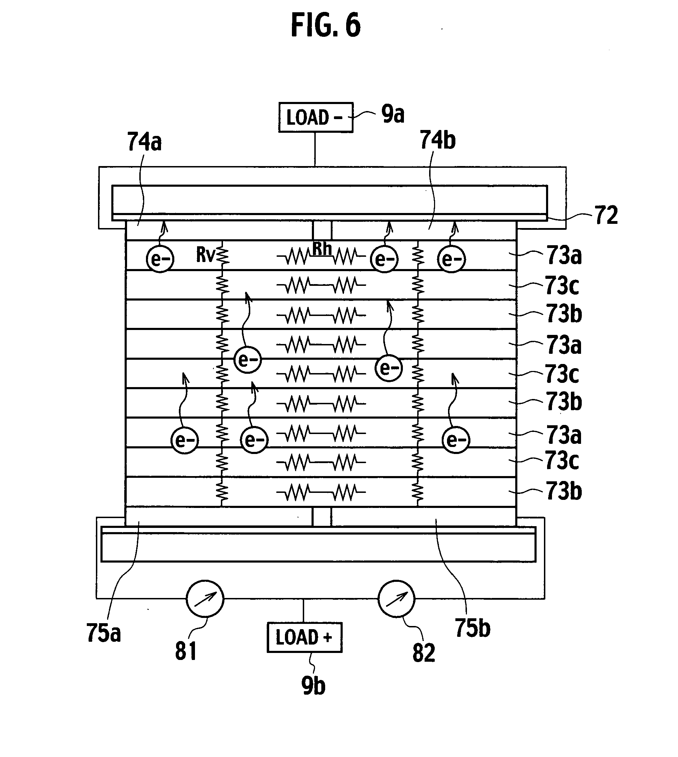

FIG. 6 schematically shows a state where the electrons move in the power generator 7. When the power generation is started, the electrons (e⁻) generated in the anode electrodes of the MEAs 73c move from the load 9b side to the load 9a side. In order to enlarge an area of each of the MEAs 73c and to miniaturize a volume of the entirety of the power generator 7, it is necessary that the anode flow channel plates 73a, the cathode flow channel plates 73b, and the MEAs 73c be formed to be large in a horizontal direction of FIG. 6 and to be small in a vertical direction of FIG. 6.

Each of the anode flow channel plates 73a, the cathode flow channel plates 73b, and the MEAs 73c has a horizontal resistance Rh, and a vertical resistance Rv. Meanwhile, the MEAs 73c and the carbon for use as the material of the anode flow channel plates 73a and the cathode flow channel plates 73b have resistances as high as several times those of the metals of the above-described current collectors. Therefore, for example, the anode first current collector 74a and the anode second current collector 74b are spaced from each other at the fixed distance to be insulated from each other, and thus a relationship that the horizontal resistance Rh is larger than the vertical resistance Rv is established. Hence, the electrons generated in the upstream region in the MEAs 73c sandwiched between the anode first current collector 74a and the cathode first current collector 75a flow toward the anode first current collector 74a. Meanwhile, the electrons generated in the downstream region in the MEAs 73c sandwiched between the anode second current collector 74b and the cathode second current collector 75b flow toward the anode second current collector 74b. As a result, the current density of the upstream region in the MEAs 73c and the current density of the downstream region therein are compared with each other, and thus the concentration of the alcohol solution can be controlled to a suitable concentration so that the output densities in the electrode surfaces of the MEAs 73c can be even.

Note that, in the example shown in FIG. 6, all of the anode first current collector 74a, the anode second current collector 74b, the cathode first current collector 75a, and the cathode second current collector 75b have the same shape, and accordingly, the measurement of the current values of the respective current collectors makes it possible to compare the current densities with one another.

Next, a description will be made of the interval at which the anode first current collector 74a and the anode second current collector 74b are arranged, or the interval at which the cathode first current collector 75a and the cathode second current collector 75b are arranged. A resistance value of the gas diffusion layers (not shown) of the MEAs 73c is higher than that of usual metal, and the gas diffusion layers exhibit extremely low conductivity in the horizontal direction of the surfaces of the MEAs 73c. The anode flow channel plates 73a and the cathode flow channel plates 73b, which are formed of the carbon, have low conductivity. The anode first current collector 74a, the anode second current collector 74b, the cathode first current collector 75a, and the cathode second current collector 75b are highly conductive.

Hence, in general, the resistance values of the above-described constituents are put in the following order:

gas diffusion layer of MEA 73c >
anode and cathode flow channel plates 73a and 73b >
anode first and second current collectors 74a and 74b and cathode first and second current collectors 75a and 75b.

Therefore, for example, the anode first current collector 74a and the anode second current collector 74b are spaced from each other at a sufficient interval, and thus the current generated in the upstream region in the MEAs 73c selectively passes through the upstream region in the anode flow channel plates 73a, and flows to the anode first current collector 74a.

However, when the interval between the anode first current collector 74a and the anode second current collector 74b is too large, current collection efficiency (covering ratio of the anode first and second current collectors 74a and 74b with respect to the area of the MEAs 73c) falls down. On the contrary, when the interval between the anode first current collector 74a and the anode second current collector 74b is extremely short, the current of the upstream region in the MEAs 73c also flows to the downstream region in the anode flow channel plates 73a, resulting in that the current also flows to the anode second current collector 74b. Accordingly, detection accuracy of the current value falls down. In this case, the detection accuracy refers to a ratio of a difference between the currents actually detected in the anode first current collector 74a and the anode second current collector 74b, both of which are in contact with the MEAs 73c located immediately thereunder, with respect to a difference between the currents to the respective current collectors when the current from the MEAs 73c ideally flows thereto. Specifically, when an interval between each anode flow channel plate 73a and each cathode flow channel plate 73b is set as a parameter, a trade-off relationship occurs between the collection efficiency and the current detection accuracy. Accordingly, while employing, as variables, three value categories of thicknesses of the anode flow channel plates 73a and the cathode flow channel plates 73b, the interval between the anode first and second current collectors 74a and 74b, and a width by which the anode first current collector 74a or the anode second current collector 74b contacts the MEA 73c, conditions for maximizing both of the collection efficiency and the current detection accuracy were investigated. As a result, it was found out that both of the collection efficiency and the current detection accuracy could be set at about 90% or more where the following expression is established:

$$8 < Lw/Lg/Lt < 90$$

where Lw is the width by which the anode first current collector 74a or the anode second current corrector 74b contacts the MEA 73c, Lg is the interval between the anode first and second current collectors 74a and 74b, and Lt is each thickness of the anode flow channel plates 73a and the cathode f low channel plates 73b. When Lw/Lg/Lt is 8 or less, the collection efficiency falls down though the current detection accuracy is enhanced. On the contrary, when Lw/Lg/Lt is 90 or more, the current detection accuracy falls down though the collection efficiency is enhanced.

Next, a description will be made of an example of a suitable range of the alcohol concentration for the power generation control using the fuel cell system according to this embodiment.

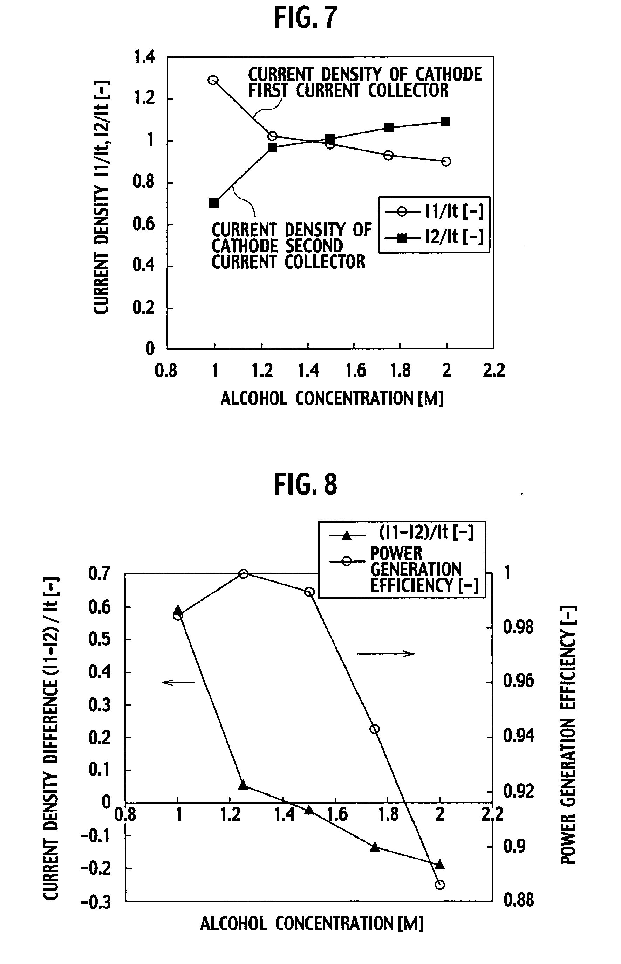

FIG. 7 is a graph showing relationships of the current densities (I1/It, I2/It) flowing to the cathode first current collector 75a and the cathode second current collector 75b with respect to the concentration of the alcohol supplied to the power generator 7. The entire load current value is constant under each condition. When the load 9 requires a predetermined value of the load current from the power generator 7, the average current density It $(A/cm^2)$ of the current to be averagely taken out of the electrode surface of one MEA 73c is obtained.

When the concentration of the alcohol supplied to the power generator 7 is higher than the optimum concentration range, an amount of crossover in which the alcohol (methanol in FIG. 7) as the fuel moves from the anode electrode side through the electrolyte membranes to the cathode electrode side, is increased in the upstream region in the anode flow channel plates 73a. Accordingly, theoutputdensityinthe upstream region falls down, and the current density (I1/It) of the cathode first current collector 75a is decreased. Meanwhile, in the downstream region in the anode flow channel plates 73a, the alcohol concentration is lowered owing to the crossover of the alcohol in the upstream region. Accordingly, the output density in the downstream region rises up, and the current density (I2/It) of the cathode second current collector 75b is also increased.

On the contrary, when the concentration of the alcohol supplied to the power generator 7 is lower than the optimum concentration range, a shortage of the fuel occurs in the downstream region in the anode flow channel plates 73a, and the output density falls down. Therefore, the current density (I2/It) of the cathode second current collector 75b falls down, and the current density (I1/It) of the cathode first current collector 75a relatively rises up.

Based on the above-described relationships, when the density 11 of the current taken out of the cathode first current collector 75a is smaller than the density I2 of the current taken out of the cathode second current collector 75b (I1 < I2), this means that the concentration of the alcohol supplied to the power generator 7 is high. Accordingly, the controller 10 of FIG. 1 just needs to make a control so as to reduce the concentration of the alcohol supplied to the power generator 7. On the contrary, when the density I1 of the current taken out of the cathode first current collector 75a is larger than the density I2 of the current taken out of the cathode second current collector 75b (I1 > I2), this indicates that the concentration of the alcohol supplied to the power generator 7 is low. Accordingly, the controller 10 just needs to make a control so as to increase the concentration of the alcohol supplied to the power generator 7.

FIG. 8 shows an example of a relationship between power generation efficiency of the power generator 7 and the ratio ((I1-I2)/It) of the difference between the density I1 $(A/cm^2)$ of the current flowing to the cathode first current collector 75a and the density I2 $(A/cm^2)$ of the current flowing to the cathode second current collector 75b with respect to the average current density It. The "power generation efficiency" refers to a ratio of energy (W) convertible into electricity with respect to energy (W) owned by the alcohol. The power generation efficiency of FIG. 8 is scaled while taking, as "1", the case where a value thereof becomes the maximum. Under each condition, the average current density, It = (I1+I2)/2 is kept to be constant. From FIG. 8, it is understood that the efficiency in the power generator 7 is the highest when the difference between the current density I1 and the current density I2 is present within a range of about $\pm 10\%$. Specifically, FIG. 8 shows that a state where the difference between the current density I1 and the current density I2 is present within the range of about $\pm 10\%$ is a state of the concentration, where the output can be evenly obtained in the surfaces of the MEAs 73c.

As described above, the alcohol concentration can be assumed from the densities I1 and I2 of the currents flowing to the cathode first current collector 75a and the cathode second current collector 75b, and such conditions where the alcohol concentration in the surfaces of the MEAs 73c becomes more even can be always created. In such a case, even if the optimum alcohol concentration to obtain high outputs from the MEAs 73c is changed with time, high outputs corresponding to the characteristics of the power generator 7 can be obtained, and simultaneously, the reaction can be evenly progressed in the surfaces without any bias. Accordingly, it also becomes possible to suppress a local deterioration of the MEAs 73c.

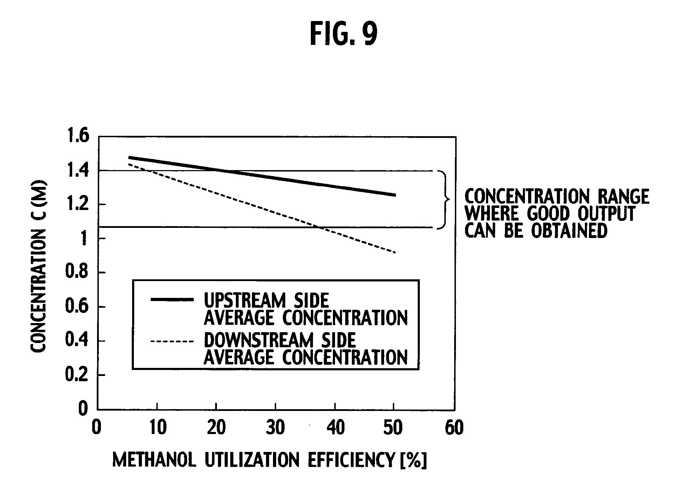

Note that the ratio ((I1-I2)/It) of the difference between the densities of the currents flowing to the cathode first current collector 75a and the cathode second current collector 75b with respect to the concentration of the alcohol supplied to the power generator 7 is changed also by a flow rate of the alcohol supplied to the power generator 7. FIG. 9 shows relationships among the alcohol (methanol) utilization efficiency, the average concentration of the alcohol in the upstream region opposed to the cathode first current collector 75a, and the average concentration of the alcohol in the downstream region opposed to the cathode second current collector 75b when the concentration of the supplied alcohol is set at 1.5M.

FIG. 9 shows a concentration range (approximately 1.1 M to 1.40M) where good outputs can be obtained.

As shown in FIG. 9, when the alcohol utilization efficiency of the power generator 7 is about 10% or less, the supply flow rate of the alcohol solution is increased. Accordingly, the difference in average concentration between the upstream side and the downstream side mostly goes off. Therefore, it becomes difficult to sense the difference between the currents flowing to the cathode first current collector 75a and the cathode second current collector 75b. Moreover, since the flow rate of the supplied alcohol is increased, a burden to the fuel feeding unit 5 is increased. Meanwhile, when the alcohol utilization efficiency is about 40% or more, the difference in average concentration between the upstream side and the downstream side becomes large, and the difference between the currents to the cathode first current collector 75a and the cathode second current collector 75b becomes easy to appear significantly. While the concentration range where the good output can be obtained is approximately 1.1M to 1.4M, the concentration range where the good output can be obtained becomes small when the difference in average concentration between the upstream side and the downstream side becomes 0 .3M or more. Hence, it is desirable that the controller 10 of FIG. 1 controls the supply amount of the alcohol so that the alcohol utilization efficiency in the power generator 7 can be about 10% or more and about 40% or less.

(First Modification)

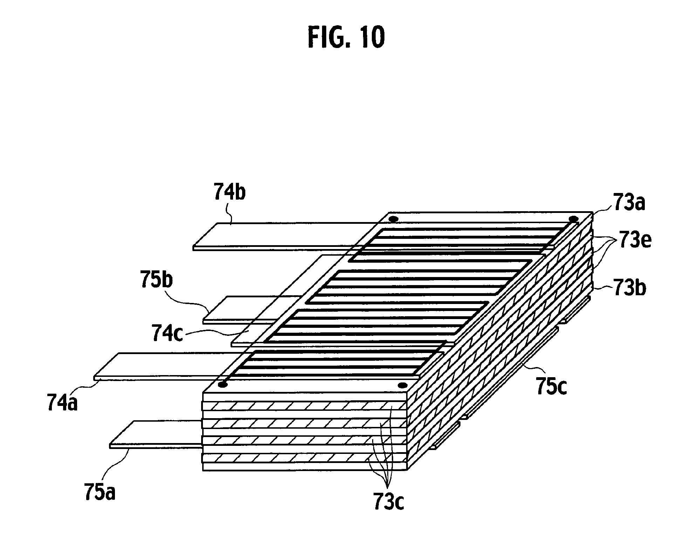

As shown in FIG. 10, in a fuel cell system according to a first modification of the embodiment, on the anode flow channel plate 73a of the uppermost power generation cell 73, an anode third current collector 74c spaced from the anode first current collector 74a and the anode second current collector 74b is disposed between the anode first current collector 74a and the anode second current collector 74b. Under the cathode flow channel plate 73b of the lowermost power generation cell 73, a cathode third current collector 75c spaced from the cathode first current collector 75a and the cathode second current collector 75b and opposed to the anode first current collector 74c is disposed between the cathode first current collector 75a and the cathode second current collector 75b. Moreover, a configuration of the first modification is different from the construction shown in FIG. 3 in that anode/cathode flow channel plates 73e are used as the members sandwiching the MEAs 73c therebetween. Each of the anode/cathode flow channel plates 73e is provided in such a manner that an anode flow channel for flowing the alcohol solution therethrough and a cathode flow channel for flowing the air therethrough are provided on one plate. The others are substantially similar to those in the fuel cell system shown in FIG. 3, and accordingly, a description thereof will be omitted.
According to the fuel cell system shown in FIG. 10, the current densities in the surfaces of the MEAs can be detected more continuously. Therefore, errors in the measurement can be prevented, and the concentration of the alcohol to be supplied to the power generator 7 can be controlled more accurately.

(Second Modification)

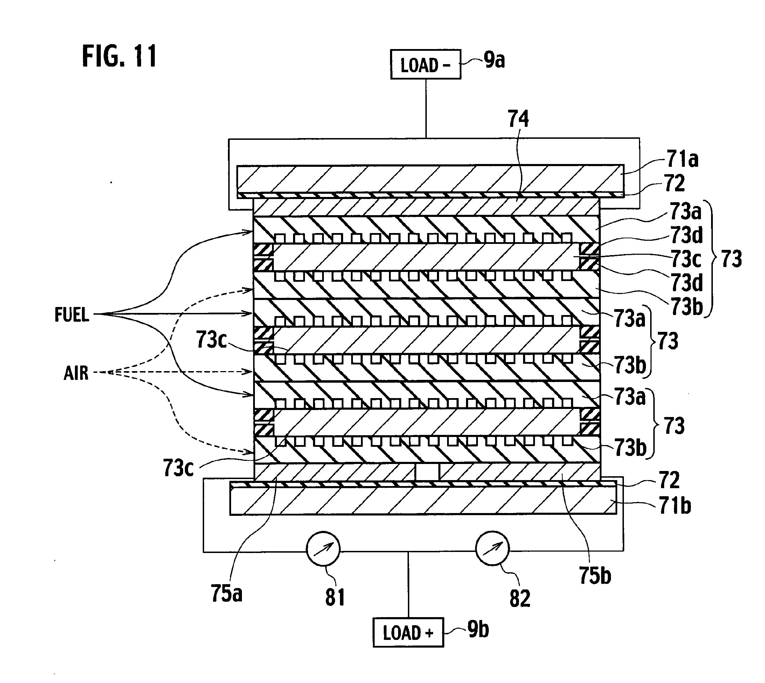

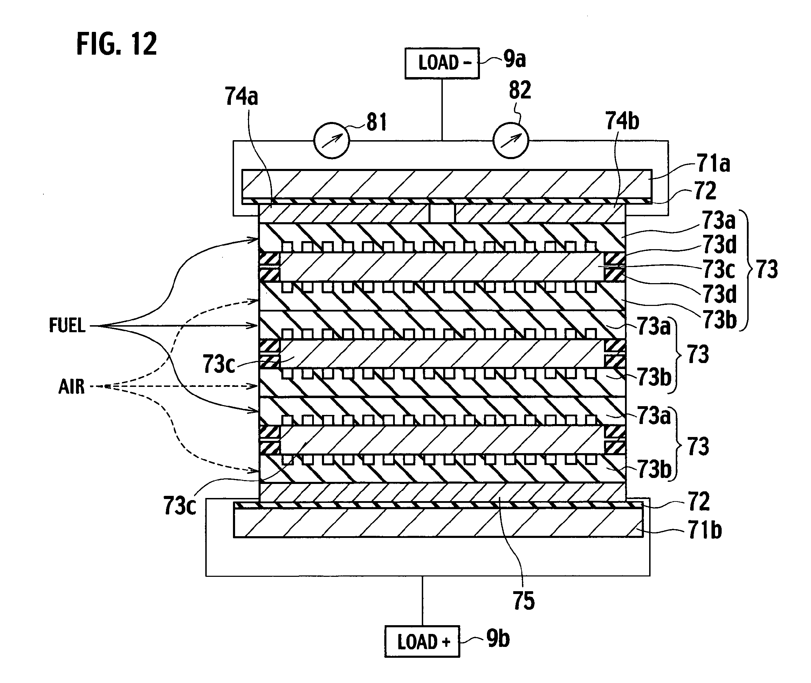

As shown in FIG. 11, a fuel cell system according to a second modification of the embodiment is different from the fuel cell system shown in FIG. 2 in the following points. Specifically, the fuel cell system according to the second modification includes the cathode first current collector 75a which collects the current out of the upstream flow channel in the cathode flow channel plate 73b of the lowermost power generation cell 73. The cathode second current collector 75b is spaced from the cathode first current collector 75a and collects the current out of the downstream passage in the cathode flow channel plate 73b of the lowermost power generation cell 73. An anode current collector 74 is opposed to the cathode first current collector 75a and the cathode second current collector 75b while interposing the plurality of power generation cells 73 therebetween. The anode current collector 74 collects the current out of the anode flow channel plate 73a of the uppermost power generation cell 73. The cathode first current collector 75a and the cathode second current collector 75b are parallelly connected to the load 9b. The anode current collector 74 is serially connected to the load 9a.
According to the fuel cell system shown in FIG. 11, the number of current collectors is reduced, thus making it possible to achieve the simplification and miniaturization of the system. Note that, in order to detect the difference between the current densities of the upstream region and the downstream region in the power generation cells, either one of the two current collectors which sandwich the power generation cells 73 therebetween just needs to be divided into a piece of the upstream region and a piece of the downstream region. Accordingly, it is a matter of course that, as shown in FIG. 12, it is possible that the cathode flow channel plate 73b-side current collector (cathode current collector 75) of the lowermost power generation cell 73 opposed to the second clamping plate 71b be formed into one plate piece.

(Third Modification)

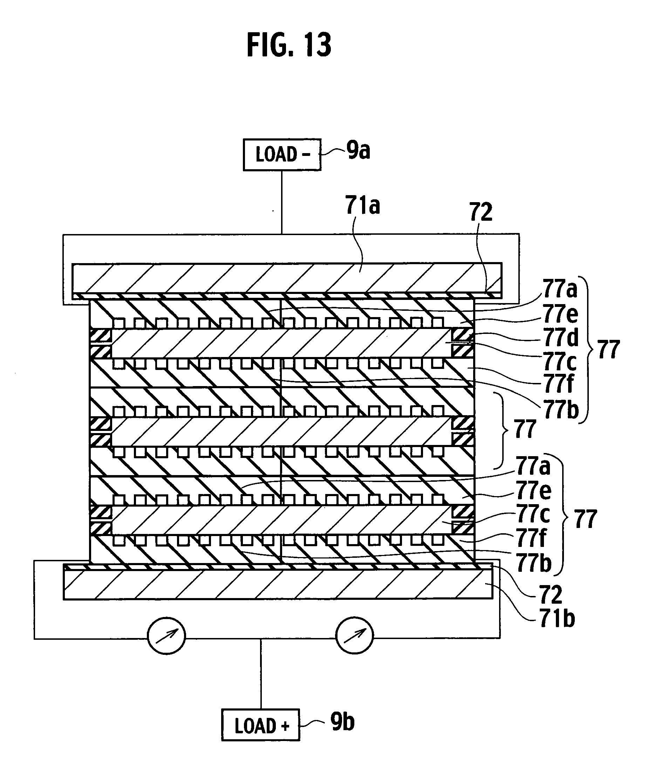

As shown in FIG. 13, a fuel cell system according to a third modification of the embodiment includes an anode upstream flow channel plates 77a opposed to the MEAs 77c, a cathode upstream flow channel plates 77b opposed to the anode upstream flow channel plates 77a while interposing the MEAs 77c therebetween. An anode downstream flow channel plates 77e is insulated from the anode upstream flow channel plates 77a and opposed to the MEAs 77c. A cathode downstream flow channel plates 77f is opposed to the anode downstream flow channel plates 77e while interposing the MEAs 77c therebetween and insulated from the cathode upstream f low channel plates 77b. The anode upstream flow channel plate 77a and anode downstream flow channel plate 77e of the uppermost power generation cell 73 are parallelly connected to the load 9a. The cathode upstream flow channel plate 77b and cathode downstream flow channel plate 77f of the lowermost power generation cell 73 are parallelly connected to the load 9b. Ceramic-made flow channel plates can be used as the anode upstream flow channel plates 77a, the cathode upstream flow channel plates 77b, the anode downstream flow channel plates 77e, and the cathode downstream flow channel plates 77f.

According to the fuel cell system shown in FIG. 13, the flow channel plates are made to also serve as the current collectors, thus making it possible to achieve the simplification and miniaturization of the fuel cell system. Moreover, it becomes possible to completely insulate the anode upstream flow channel plate 77a and the anode downstream flow channel plate 77e from each other. Accordingly, it is possible to prevent such a problem that the current generated in the MEAs 73c in the region opposed to the anode upstream flow channel plates 77a undesirably flows to the region opposed to the anode downstream flow channel plates 77e, and it becomes possible to increase the collection efficiency.

(Fourth Modification)

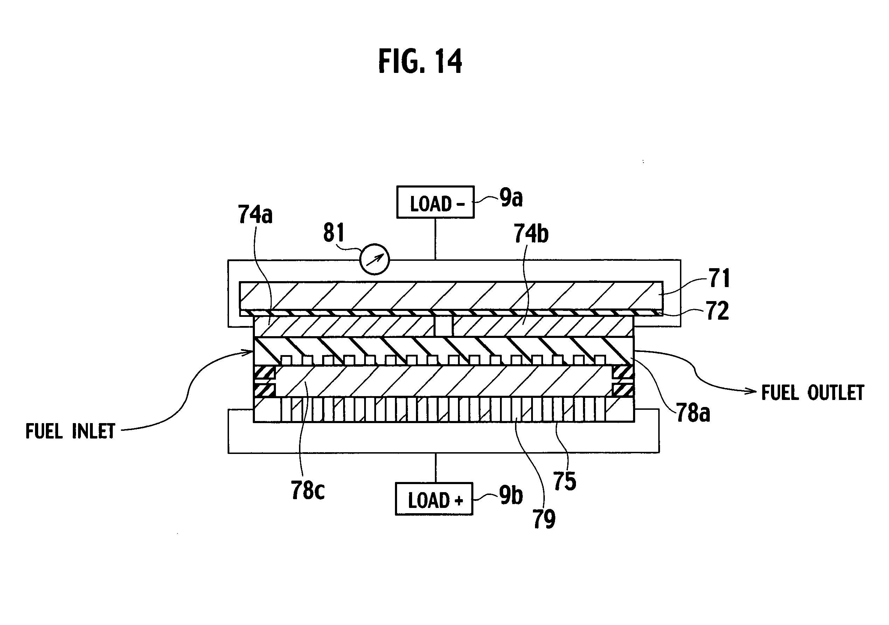

As shown in FIG. 14, a fuel cell system according to a fourth modification of the embodiment includes an MEA 78c, an anode flow channel plate 78a opposed to the MEA 78c, a cathode current collector 75 opposed to the anode flow channel plate 78a while interposing the MEA 78c therebetween, the anode first current collector 74a that is opposed to the cathode current collector 75 while interposing the anode flow channel plate 78a therebetween and takes the current out of the upstream flow channel of the anode flow channel plate 78a, and the anode second current collector 74b that is spaced from the anode first current collector 74a and takes the current out of the downstream flow channel of the anode flow channel plate 78a. In the cathode current collector 75, a plurality of holes 79 for taking the air into the fuel cell system are provided. The cathode current collector 75 is serially connected to the load 9b. The anode first current collector 74a and the anode second current collector 74b are parallelly connected to the load 9a. According to the fuel cell system shown in FIG. 14, the flow channel plates are made to also serve as the current collectors, thus making it possible to achieve the simplification and miniaturization of the fuel cell system.

(Fifth modification)

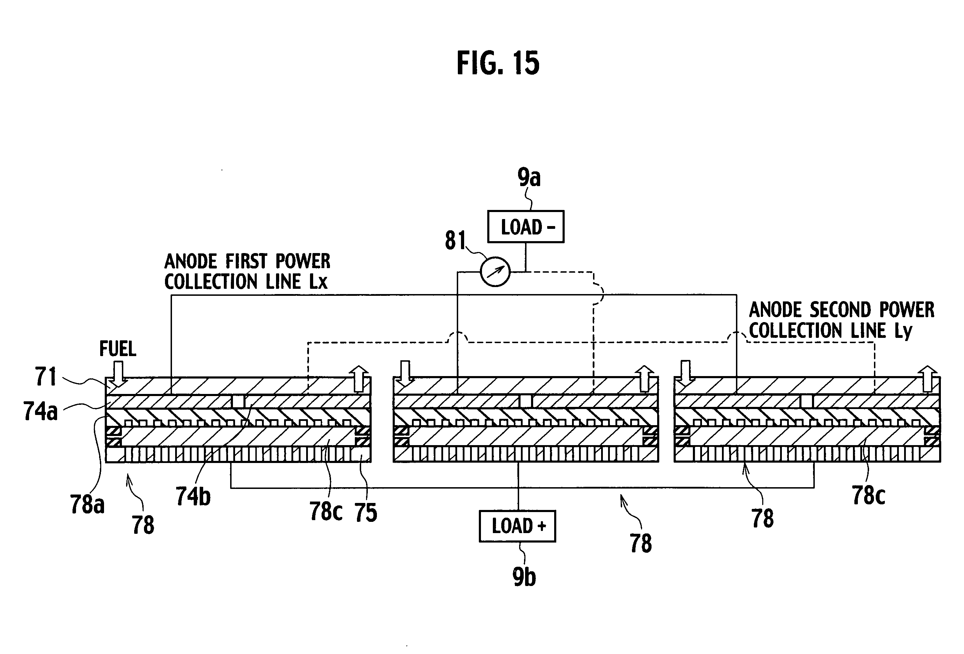

As shown in FIG. 15, three pieces of the power generation cells 78 are parallelly arranged, thus making it possible to obtain a larger output than that from the fuel cell system of FIG. 14. In such a case, the anode first current collectors 74a of the respective power generation cells 78 are parallelly connected to the load 9a through an anode first poser collection line Lx. The anode second current collectors 74b of the respective power generation cells 78 are parallelly connected to the load 9a through an anode second power collection line Ly. Cathode collection lines of the respective power generation cells 78 are parallelly connected to the load 9b. With regard to the measurement of the current densities, currents flowing through the respective collection lines are sensed by the ammeter 81 or the like, thus making it possible to grasp the state of the concentrations in the power generation cells 78. Note that, when large resistances occur in the collecting lines and the respective contact points thereof, the currents flowing therethrough are sometimes changed. Accordingly, for the collection lines, it is desirable to select a material which reduces the resistances thereof as much as possible.

(OTHER EMBODIMENTS)

Various modifications will become possible for those skilled in the art after receiving the teachings of the present disclosure without departing from the scope thereof.

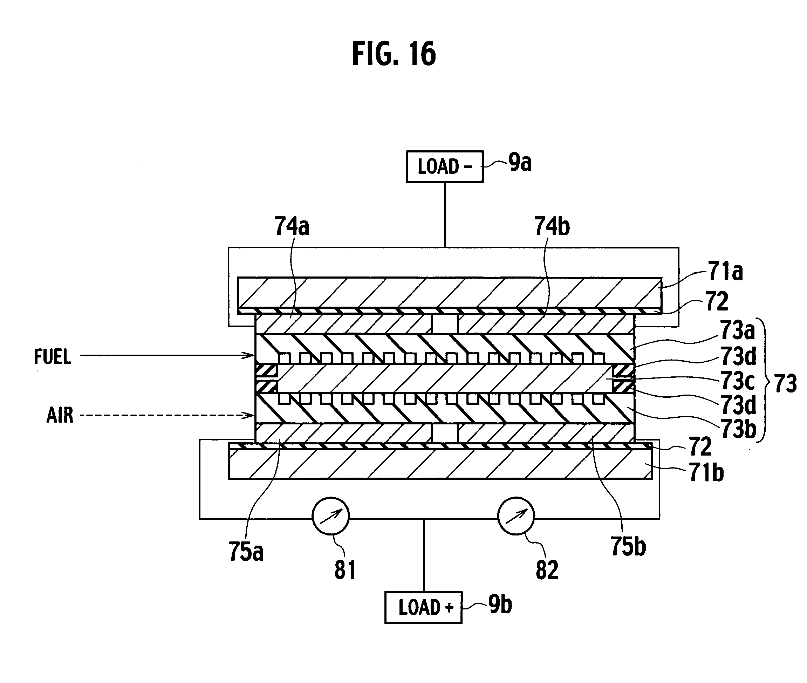

In the fuel cell system shown in FIGs . 2 , 3, 6, and 10-13, the number of the power generation cells 73 is not limited. For example, as shown in FIG. 16, only one power generation cell 73 may be used for the power generator, thus making it possible to realize miniaturization of the fuel cell system.

The present embodiment illustrates that the lowermost flow channel plate is assigned as cathode side, and the uppermost channel plate is assigned as anode side. As a matter of course, the lowermost flow channel plate can be assigned as anode side and the uppermost channel plate can be assigned as cathode side.

**Claims**

1. A fuel cell system comprising:

a cell stack comprising a plurality of power generation cells stacked on each other, each including a first flow channel plate, a second flow channel plate, and a membrane electrode assembly interposed between the first and second flow channel plates, the first flow channel plate of most cathode side is assigned as a cathode side first plate and the second flow channel plate of most anode side is assigned as a anode side second plate;

a first current collector configured to collect a current from an upstream region in one of the cathode side first plate or the anode side second plate;

a second current collector spaced from the first current collector, configured to collect a current from a downstream region in one of the cathode side first plate or the anode side second plate;

and
a controller configured to control a supply amount of alcohol to the power generation cells, based on a difference between current densities of the first and second current collectors.

2. The fuel cell system according to claim 1, further comprising:

a third current collector opposed to the first current collector through the cell stack, configured to collect a current from an upstream region in the other of the cathode side first plate or the anode side second plate; and
a fourth current collector opposed to the second current collector, configured to collect a current from a downstream region in the other of the cathode side first plate or the anode side second plate.

3. The fuel cell system according to either of claims 1 or 2, wherein the controller decreases the supply amount of the alcohol or stops a supply of the alcohol, when the current density of the first current collector is lower than the current density of the second current collector.

4. The fuel cell system according to any preceding claim, wherein the controller increases the supply amount of the alcohol when the current density of the first current collector is higher than the current density of the second current collector.

5. The fuel cell system according to any preceding claim, wherein the controller controls the supply amount of the alcohol when a ratio of the difference between the current densities with respect to an average current density of the membrane electrode assembly is about 10% or more.

6. The fuel cell system according to any preceding claim, wherein the controller controls the supply amount of the alcohol so that alcohol utilization efficiency in the power generation cells is kept in a range of from about 10% to about 40%.

7. The fuel cell system according to any preceding claim, further comprising:

a detector detecting a current value of at least one of the first and second current collectors,

wherein the controller further includes:

a calculation unit configured to calculate the current densities of the first and second current collectors based on a current value and an area of a portion where the first current collector, the second current collector, and the membrane electrode assembly overlap one another;
a comparison unit configured to compare whether or not a ratio of a difference between the current densities of the first and second current collectors with respect to an average current density of the membrane electrode assembly is within a predetermined range; and
an adjustment unit configured to adjust the supply amount of the alcohol based on a result of the comparison.

8. The fuel cell system according to claim 7, wherein the controller further comprises a determination unit configured to determine whether or not the power generation cells are in a normal operation mode, and the calculation unit calculates the current densities based on a result of the determination.

9. The fuel cell system according to any preceding claim, wherein the first and second current collectors are spaced from each other at an interval so that a following expression can be established:

$$8 < Lw/Lg/Lt < 90$$

where Lw is a length by which each of the first and second current collectors overlaps the membrane electrode assembly, Lg is the interval between the first and second current collectors, and Lt is each thickness of the first and second flow channel plates.

10. The fuel cell system according to any preceding claim, further comprising:

a third current collector opposed to the first and second current correctors through the cell stack, configured to collect a current from in the other of the cathode side first plate or the anode side second plate.

11. The fuel cell system according to claim 10, further comprising a fourth current collector disposed between the first and second current collectors, having spaces between the first and second current collectors, and opposed to the third current collector.

12. A fuel cell system comprising:

a plurality of power generation cells, each includes:

a first upstream flow channel plate:
a second upstream flow channel plate opposing to the first upstream flow channel plate:

a first downstream flow channel plate disposed on a downstream side of the first upstream flow channel plate, and insulated from the first upstream flow channel plate:

a second downstream flow channel plate disposed on a downstream side of the second upstream flow channel plate, and insulated from the second downstream flow channel plate; and
a membrane electrode assembly interposed between the first upstream and downstream flow channel plates and the second upstream and downstream flow channel plates; and

a controller configured to control a supply amount of alcohol to the power generation cells, based on a difference between current densities of the first and first downstream plates.

**13.** A fuel cell system comprising:

a membrane electrode assembly;
a plate opposed to the membrane electrode assembly, having a flow channel which flows alcohol;
a first current collector having a plurality of holes, opposing to the plate through the membrane electrode assembly;
a second current collector opposed to the first current collector, interposing the plate therebetween, and configured to collect a current from an upstream region of the plate;
a third current collector spaced from the second current collector, and configured to collect a current from a downstream region of the plate; and
a controller configured to control a supply amount of the alcohol to the plate based on a difference between current densities of the second and third current collectors.

# FIG. 1

100 AUXILIARY

2 FUEL TANK

L1

3 FUEL SUPPLY UNIT

L2

4 MIXING TANK

41

L5

L3

5 FUEL FEEDING UNIT

L4

7 POWER GENERATOR (CELL STACK)

L7

AIR FEEDING UNIT

L6

6

8 DETECTOR

LOAD

9

CONTROLLER ~10

DETERMINATION UNIT ~11

CALCULATION UNIT ~12

COMPARISON UNIT ~13

ADJUSTMENT UNIT ~14

STORAGE DEVICE ~20

EP 1 916 730 A1

FIG. 2

LOAD − ~9a

74a    74b

71a

72
73a
73d
73c } 73
73d
73b

73a
} 73
73b

73a
} 73
73b

72
71b

FUEL

AIR

75a    75b
81    82

LOAD + ~9b

EP 1 916 730 A1

# FIG. 3

FUEL OUTLET

74b

75b

74a

75a

73c

FUEL INLET

73b

73a

EP 1 916 730 A1

# FIG. 4

DRIVE POWER GENERATOR ——— S1

↓

POWER COLLECTION ——— S2

↓

CONTROL FUEL SUPPLY ——— S3

# FIG. 5

START

↓

S31

NORMAL OPERATION MODE — NO

↓ YES

CALCULATE CURRENT DENSITY I1
CALCULATE CURRENT DENSITY I2 ——— S32

↓

S33

(I1−I2)/It > UPPER LIMIT? — NO

YES ↓ → S35

(I1−I2)/It > LOWER LIMIT? — NO

S34 ↓ YES

INCREASE SUPPLY AMOUNT OF FUEL

DECREASE SUPPLY AMOUNT OF FUEL

S36

END

# FIG. 6

## FIG. 7

## FIG. 8

# FIG. 9

CONCENTRATION RANGE
WHERE GOOD OUTPUT
CAN BE OBTAINED

— UPSTREAM SIDE
AVERAGE CONCENTRATION
----- DOWNSTREAM SIDE
AVERAGE CONCENTRATION

CONCENTRATION C (M)

METHANOL UTILIZATION EFFICIENCY [%]

# FIG. 10

FIG. 11

EP 1 916 730 A1

FIG. 12

71a
72
73a
73d
73c
73d
73b
73
73a
73b
73
73a
73b
73
72
71b

74b
74a
9a
82
81
LOAD −
LOAD +
9b
75
73c
73c
FUEL
AIR

# FIG. 13

FIG. 14

# FIG. 15

EP 1 916 730 A1

# FIG. 16

EP 1 916 730 A1

**European Patent Office**

**EUROPEAN SEARCH REPORT**

Application Number

EP 07 25 1102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/053814 A1 (IMAMURA TOMONORI [JP] ET AL) 10 March 2005 (2005-03-10) * paragraphs [0005], [0037] - [0040], [0050] - [0053], [0061] - [0065], [0195] - [0206], [0483]; figures 1,2,5,6,14,31,34,35 * ----- | 1-13 | INV. H01M8/02 H01M8/04 H01M8/10 |
| Y | EP 1 473 790 A1 (SONY CORP [JP]) 3 November 2004 (2004-11-03) * paragraphs [0013] - [0015], [0026] - [0028]; figure 1 * ----- | 1-13 | |
| Y | EP 1 280 218 A (ABB RESEARCH LTD [CH]; DU PONT [US]) 29 January 2003 (2003-01-29) * paragraphs [0024], [0025] * ----- | 1-13 | |

**TECHNICAL FIELDS SEARCHED (IPC)**

H01M

The present search report has been drawn up for all claims

| Place of search | Date of completion of the search | Examiner |
|---|---|---|
| Munich | 10 August 2007 | Brune, Markus |

EPO FORM 1503 03.82 (P04C01)

**ANNEX TO THE EUROPEAN SEARCH REPORT
ON EUROPEAN PATENT APPLICATION NO.**

EP 07 25 1102

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2007

| Patent document cited in search report | | Publication date | Patent family member(s) | | Publication date |
|---|---|---|---|---|---|
| US 2005053814 | A1 | 10-03-2005 | DE 102004042780 | A1 | 19-05-2005 |
| EP 1473790 | A1 | 03-11-2004 | CN 1551396 | A | 01-12-2004 |
| | | | DE 602004000218 | T2 | 03-08-2006 |
| | | | JP 2004327354 | A | 18-11-2004 |
| | | | KR 20040093421 | A | 05-11-2004 |
| | | | US 2005037248 | A1 | 17-02-2005 |
| EP 1280218 | A | 29-01-2003 | WO 03012904 | A2 | 13-02-2003 |
| | | | JP 2004537150 | T | 09-12-2004 |
| | | | US 2004247954 | A1 | 09-12-2004 |

**EP 1 916 730 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P2006254743 B